# EUROPEAN PATENT APPLICATION

(11) **EP 2 765 542 A1**
(43) Date of publication of application: **13.08.2014**
(21) Application number: 14154257.1
(22) Date of filing: 07.02.2014
(51) Int. Cl.: G06Q 10/00

(54) **Assessment tools**

(30) Priority: 11.02.2013 US 201361763031 P
(71) Applicant: Whatif AS, 9481 Harstad (NO)
(72) Inventor: Kietil, Odin Johnsen, 9404 Harstad (NO); Tone, Alfhid Henriksen, 9404 Harstad (NO)
(74) Representative: Samuels, Adrian James

(57) **Abstract**

A computerised tool for assessing scenarios is arranged to allow a user to select a placement for an icon representing a scenario on a matrix representing, along respective axes thereof, the likelihood of the scenario and the impact of the scenario. The tool is further arranged to display information relating to placements for said scenario selected by previous users. The tool is also further arranged to allow said user to select one or more likelihood influence indications representing actions which have been taken or may be taken to influence the likelihood of the scenario from a plurality of available likelihood influence indications and to display the selection of likelihood influence indications by previous users.

## Description

This invention relates to computerised tools for allowing users to organise information to allow them to make assessment of complex real-world situations - e.g. the risks and opportunities facing a business.

The processes involved in humans making decisions are complex and not well understood. However it has been found that better decisions are made when information relevant to the decision is presented visually in an organised way.

When viewed from a first aspect the present invention provides a computerised tool for assessing scenarios arranged to allow a user to select a placement for an icon representing a scenario on a matrix representing, along respective axes thereof, the likelihood of the scenario and the impact of the scenario; the tool being further arranged to display information relating to placements for said scenario selected by previous users; and the tool further being arranged to allow said user to select one or more likelihood influence indications representing actions which have been taken or may be taken to influence the likelihood of the scenario from a plurality of available likelihood influence indications and to display the selection of likelihood influence indications by previous users.

Thus in accordance with the invention a user can make assessments of a particular scenario in a logical way, but more importantly can benefit from the information and experience provided by other users embodied in their responses to the same scenario.

Preferably the user is provided with a predefined list of impact influence indications.

In a set of embodiments the tool is further arranged to allow said user to select one or more impact influence indications representing actions which have been taken or may be taken to influence the impact of the scenario from a plurality of available impact influence indications and to display the selection of impact influence indications by previous users. Preferably the user is provided with a predefined list of impact influence indications.

In a set of embodiments the tool is used to assess the risk associated with a negative scenario. In these embodiments the likelihood influence indications comprise likelihood barrier indications to reduce the likelihood of the scenario and the impact influence indications comprise impact barrier indications to reduce the impact of the scenario.

In another set of embodiments the tool is used to assess the opportunities associated with a positive scenario. In these embodiments the likelihood influence indications comprise likelihood enhancement indications to increase the likelihood of the scenario and the impact influence indications comprise impact enhancement indications to increase the impact of the scenario.

In a set of embodiments the tool is further arranged to allow said user to select one or more impact indications representing types of impact the scenario may have.

The tool may be arranged to provide a single overall parametric indication relating to a scenario depending on selections made by the user and/or by previous users. For example where the tool is used to assess risk, each scenario may be given an overall risk score; where the tool is used to assess opportunity, each scenario may be given an overall opportunity score. The overall parametric score may depend on any one or more of: the placement of said scenario on said matrix by said user, the selection of likelihood influence indications by said user, the selection of impact influence indications by said user, the selection of impact types by the user, the placement of said scenario on said matrix by previous users, the selection of likelihood influence indications by previous users, the selection of impact influence indications by previous users and/or the selection of impact types by previous users.

The icon placements and indication selections made by previous users may be stored locally where the software for the tool is running. Alternatively they may be stored on a remote server as downloaded as required.

The tool may be arranged to allow a user to add to a predefined list of likelihood influence indications.

The tool may be arranged to allow a user to add to a predefined list of impact influence indications.

The tool may be arranged to allow a user to add to a predefined list of scenarios.

The tool may be arranged to allow a user to add to record actions taken to influence a likelihood and/or an impact.

The Applicant has recognised that in addition to providing a novel and inventive was of assessing risks or opportunities the underlying technical features that enable it are novel and inventive *per se* and thus when viewed from a further aspect the present invention provides a computerised tool arranged to: allow a user to select a placement for an icon bearing unique identifying information on a matrix having at least two axes, the tool being further arranged to display information relating to placements for said scenario selected by previous users and the tool being further arranged to present a plurality of predetermined options relating to said icon and to display the selections made by previous users.

In a set of embodiments the tool is arranged to present a report and/ or a Web presentation to the user for a scenario giving information related to the selections made by the user and by previous users.

The invention extends to a method of assessing scenarios using a computerised tool, the method comprising:
a user selecting a placement for an icon representing a scenario on a matrix representing, along respective axes thereof, the likelihood of the scenario and the impact of the scenario;
displaying information relating to placements for said scenario selected by previous users;
said user selecting one or more likelihood influence indications representing actions which have been taken or may be taken to influence the likelihood of the scenario from a plurality of available likelihood influence indications; and
displaying the selection of likelihood influence indications by previous users.

The invention also extends to computer software, either on a carrier or not, providing, when executed on a suitable computing device, a computerised tool for assessing scenarios comprising logic:
to allow a user to select a placement for an icon representing a scenario on a matrix representing, along respective axes thereof, the likelihood of the scenario and the impact of the scenario;
to display information relating to placements for said scenario selected by previous users; and
to allow said user to select one or more likelihood influence indications representing actions which have been taken or may be taken to influence the likelihood of the scenario from a plurality of available likelihood influence indications and to display the selection of likelihood influence indications by previous users.

The invention extends to a computing device having said software loaded thereon.

The computing device may be a standalone or networked computer, smartphone, laptop, tablet computer, e-book reader, or any other device capable of accepting inputs from a user as described hereinabove and displaying information to a user as also described hereinabove.

A particular embodiment of the invention will now be described, by way of example only, with reference to the accompanying drawings in which:
Figs. 1 to 5 are screenshots from an embodiment of the invention showing how a user can assess the risk associated with a pre-defined scenario; and
Fig. 6 is a schematic diagram showing the components of an implementation of the embodiment.

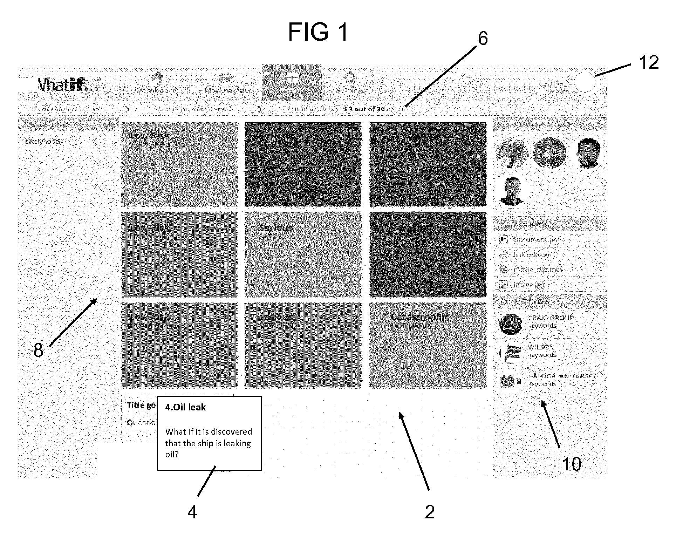

Fig. 1 shows a screenshot of a software too used for assessing risks associated with a number of pre-defined scenarios. The tool may be provided running on a local computer, tablet computer, smartphone etc. All data may be held locally or the tool may communicate with a remote server e.g. on a local area network, wide area network or over the internet.

The screen has a number of different areas. The main central part of the screen is taken up by a three by three matrix 2. This represents two independent axes: likelihood and impact, so that along the vertical axis is represented increasing likelihood (from "Not Likely" at the bottom to "Very Likely" at the top) and along the horizontal axis is represented increasing impact (from "Less Risk" at the left hand side to "Catastrophic" at the right hand side).

Beneath the matrix 2 is an area for displaying a scenario 'card' 4. In this example the scenario on the card 4 is " What if it is discovered that the ship is leaking oil?". As is apparent from the number on the card and the information box 6 at the top of the matrix 2, Fig. 1 shows the fourth card in a series of thirty being displayed.

To the left of the main matrix 2 is an area 8 which is used to make selections of various parameters relating to the card and for displaying the selections made by previous users as will be described in greater detail below. To the right of the main matrix 2 is an area 10 for links to useful resources and connections to people who may be able to help with the process. In the top right hand corner of the screen is an indicator giving the current risk score (on a scale of 1 to 5) for the scenario card 4 based on the information given so far,

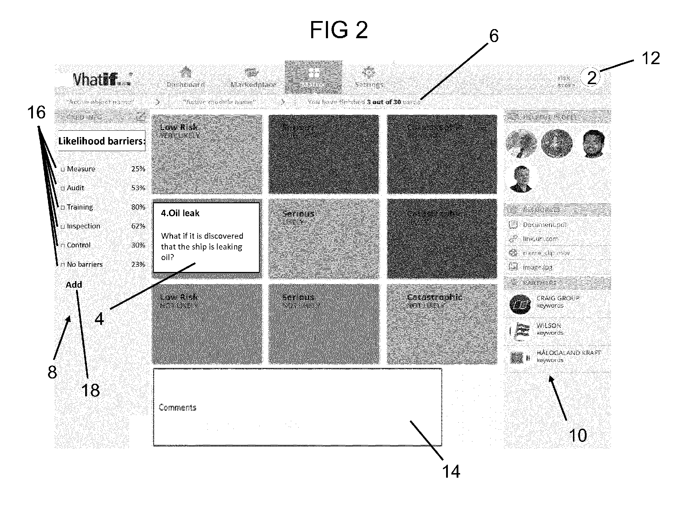

Fig. 1 represents the first step in the process of analysing a scenario in which the scenario card 4 is presented at the bottom of the screen. The next step is represented in Fig. 2. The user places the scenario card 4 on one of the boxes of the matrix 2. Here it is shown as having been placed on the box representing a scenario which is likely but of limited impact (low risk). A risk score of '2' is given in the indicator box 12 to reflect the placement of the card 4.

A comment box 14 is made available at the bottom of the screen to record any comments the user wishes to make. On the left hand side of the screen in the parameter selection area 8 are displayed a number of possible "Likelihood barriers". These are steps which have been taken by the user to reduce the likelihood of the scenario happening. Each is accompanied by a check-box to allow the user to select it and also by a percentage indicating the proportion of previous users which have selected that check box. Thus it may be seen that 25% of previous users have indicated that they carry out a 'measure' or a positive action measurements as a way of avoiding the scenario. The selections made by the current users are of course added to the statistical base used for the percentages displayed to subsequent users. A button 18 is provided to allow the user to add additional barriers.

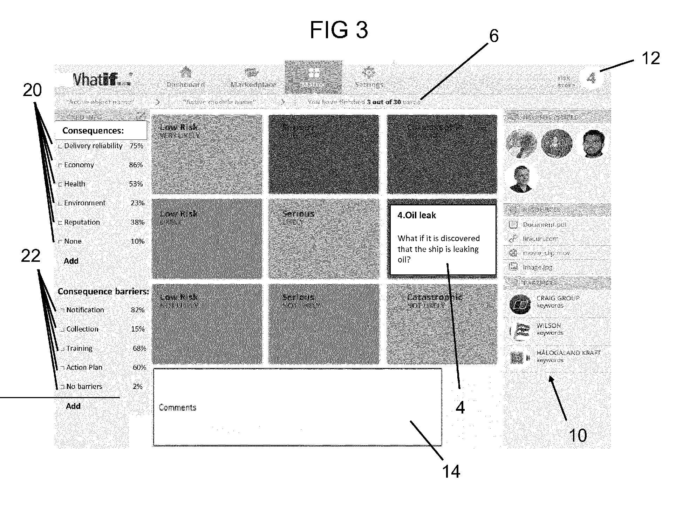

With regard to Fig. 3 it can be seen that the user is now presented with two further sets of selections to make: 'Consequences' 20 and 'Consequence Barriers' 22. The former represents the relative importance of various possible consequences of the scenario and again the user may make selections and see the aggregated selections of previous users, as well as adding new ones of their own. The consequence barriers 22 represent the actions that the user has taken to reduce the potential impact of the scenario happening. Again the user can select, see other selections, or add new options.

Fig. 3 also shows that as a result of considering the issues and seeing the experience of others, the user has moved the scenario card 4 to a new square - now indicating catastrophic consequences. The risk score 12 shown is now increased to '4'.

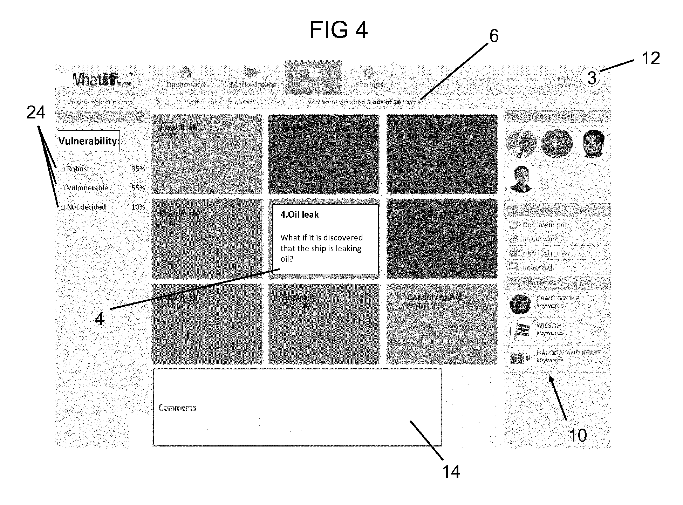

In Fig. 4 the user carries out the final selection of vulnerability using one of three mutually exclusive options 24. Since only one option can be chosen the percentages reflecting previous choices add up to a hundred. The final decision made by the user is to move the scenario card 14 to the central square in the matrix 2 reflecting the view that the scenario has a fair degree of likelihood and would be serious if it did occur, but not catastrophic. The moving of the scenario card reduced the risk score 12 from '4' to '3'. Although not illustrated in Fig. 4. the user is also shown the risk score attributed to that card by other users.

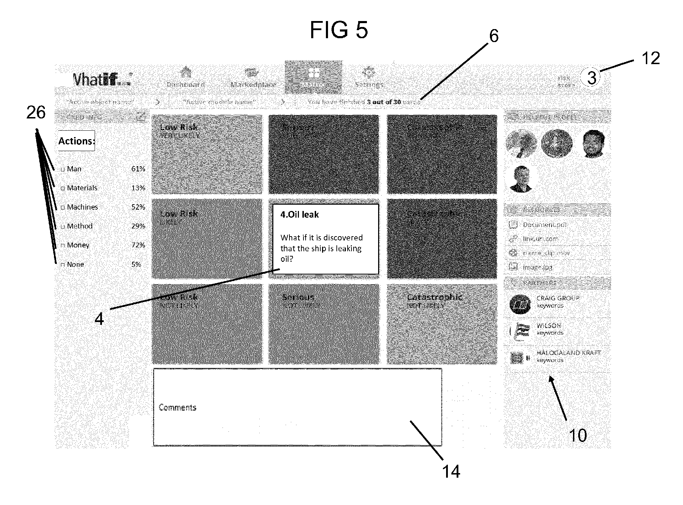

If the user decided in the step shown in Fig. 4 that the risk is unacceptable - i.e. chose 'vulnerable' in Fig. 4, then in Fig. 5 the user is given the opportunity to consider measures 26 they might take to lower the risk. Such measures may be an improvement in management, machine, man power, method etc. (pre-defined by the creator of the analysis). The user ticks off the most achievable measure in practice and is also given information on which measures others have chosen and how successful these have been. Success may be determined by logging the movement of the card 4 from one square in the matrix 2 to another after the measure/action has been taken (i.e. on a subsequent use of the tool by the earlier user).

Once the actions outlined above have been completed in respect of one scenario card 4, the next may be automatically presented for the user to analyse. Once all such cards have been analysed a report is produced giving the risk score for each scenario and an overall risk score for the project.

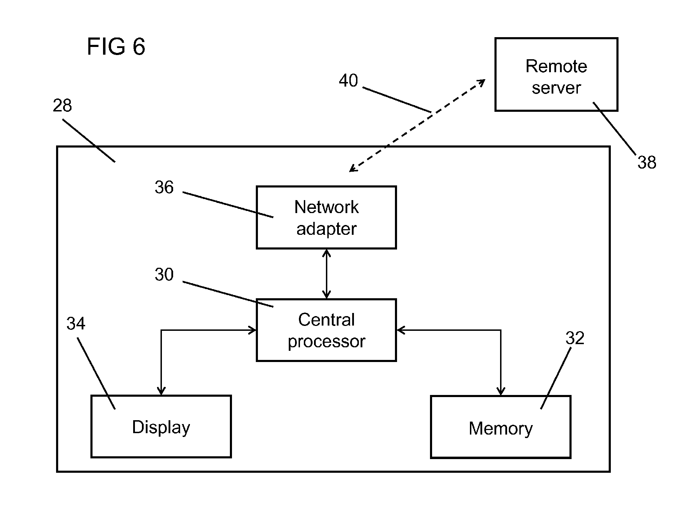

Fig. 6 shows, schematically, the main components of a computing device 28 implementing an embodiment of the invention. As mentioned above the device could be a PC, smartphone, tablet computer or the like. It comprises a central processor 30 connected to memory 32 (which includes both working, random access memory and read only memory) and also to a display screen 34. The processor 30 is also connected to a network adapter 36 which provides a data connection to a remote server 38 over a network connection 40. Any data network could be used - e.g. the internet, LAN, WAN etc. The connection could be over a wire - e.g. Ethernet, wireless e.g. WiFI or a cellular data network.

In use the tool described with reference to Figs. 1 to 5 could be stored in the memory 32 and operated by the processor 30 to display on the display. Data regarding the selections made by other users can be downloaded from the remote server 38 over the network 40. Similarly selections made by the user may be uploaded over the same network so that other users can view them.

It will be seen by those skilled in the art from the description of an exemplary embodiment given above the process as a whole gives the user a lot of information with which he or she can take qualified decisions regarding likelihood, consequences, consequence dimension, risk score and measures which can be taken. The combination of pre-defined actual scenarios, pre-defined barriers etc, and the automatic incorporation of information in a well organized way from other users regarding the analysis they have made, measures they have employed and actions they have taken make the tool particularly useful.

Moreover by allowing the user to create their own scenarios and modules, a powerful bank of organised experiential knowledge is built up that can be exploited by the user in the future and by any subsequent users.

Many variations and modifications to the embodiments described may be made within the scope of the present invention. For example instead of analysing risk the invention can also be used to analyse other things - e.g. opportunities.

## Claims

1. A computerised tool for assessing scenarios arranged to allow a user to select a placement for an icon representing a scenario on a matrix representing, along respective axes thereof, the likelihood of the scenario and the impact of the scenario; the tool being further arranged to display information relating to placements for said scenario selected by previous users; and the tool further being arranged to allow said user to select one or more likelihood influence indications representing actions which have been taken or may be taken to influence the likelihood of the scenario from a plurality of available likelihood influence indications and to display the selection of likelihood influence indications by previous users.

2. A computerised tool as claimed in claim 1 arranged to provide the user with a predefined list of impact influence indications.

3. A computerised tool as claimed in claim 1 or 2 further arranged to allow said user to select one or more impact influence indications representing actions which have been taken or may be taken to influence the impact of the scenario from a plurality of available impact influence indications and to display the selection of impact influence indications by previous users.

4. A computerised tool as claimed in any preceding claim further arranged to allow said user to select one or more impact indications representing types of impact the scenario may have.

5. A computerised tool as claimed in any preceding claim arranged to provide a single overall parametric indication relating to a scenario depending on selections made by the user and/or by previous users.

6. A computerised tool as claimed in claim 5 wherein the overall parametric score depends on one or more of the group comprising: a placement of said scenario on said matrix by said user, a selection of likelihood influence indications by said user, a selection of impact influence indications by said user, a selection of impact types by the user, a placement of said scenario on said matrix by previous users, a selection of likelihood influence indications by previous users, a selection of impact influence indications by previous users or the selection of impact types by previous users.

7. A computerised tool as claimed in any preceding claim arranged to allow a user to add to a predefined list of likelihood influence indications.

8. A computerised tool as claimed in any preceding claim arranged to allow a user to add to a predefined list of impact influence indications.

9. A computerised tool as claimed in any preceding claim arranged to allow a user to add to a predefined list of scenarios.

10. A computerised tool as claimed in any preceding claim arranged to allow a user to record actions taken to influence a likelihood and/or an impact.

11. A computerised tool arranged to: allow a user to select a placement for an icon bearing unique identifying information on a matrix having at least two axes, the tool being further arranged to display information relating to placements for said scenario selected by previous users and the tool being further arranged to present a plurality of predetermined options relating to said icon and to display the selections made by previous users.

12. A computerised tool as claimed in claim 11 arranged to present a report and/ or a Web presentation to the user for a scenario giving information related to the selections made by the user and by previous users.

13. A method of assessing scenarios using a computerised tool, the method comprising:
a user selecting a placement for an icon representing a scenario on a matrix representing, along respective axes thereof, the likelihood of the scenario and the impact of the scenario;
displaying information relating to placements for said scenario selected by previous users;
said user selecting one or more likelihood influence indications representing actions which have been taken or may be taken to influence the likelihood of the scenario from a plurality of available likelihood influence indications; and
displaying the selection of likelihood influence indications by previous users.

14. A computer software product, which, when executed on a computing device, provides a computerised tool for assessing scenarios comprising logic:
to allow a user to select a placement for an icon representing a scenario on a matrix representing, along respective axes thereof, the likelihood of the scenario and the impact of the scenario;
to display information relating to placements for said scenario selected by previous users; and
to allow said user to select one or more likelihood influence indications representing actions which have been taken or may be taken to influence the likelihood of the scenario from a plurality of available likelihood influence indications and to display the selection of likelihood influence indications by previous users.
